Europäisches Patentamt

European Patent Office

Office européen des brevets

(11) Publication number: **0 180 359**
**B1**

# (12) EUROPEAN PATENT SPECIFICATION

(45) Date of publication of patent specification: **31.05.89**

(21) Application number: **85307307.0**

(22) Date of filing: **11.10.85**

(51) Int. Cl.⁴: **H 02 K 15/04, H 01 F 41/06**

(54) Methods and apparatus for forming double-layer motor coils.

(30) Priority: **25.10.84 JP 225474/84**

(43) Date of publication of application:
**07.05.86 Bulletin 86/19**

(45) Publication of the grant of the patent:
**31.05.89 Bulletin 89/22**

(84) Designated Contracting States:
**AT DE FR GB IT NL**

(56) References cited:
**DE-C- 210 701**
**DE-C- 601 053**
**DE-C- 640 121**
**US-A-1 406 092**

(73) Proprietor: **SONY CORPORATION**
**7-35 Kitashinagawa 6-Chome Shinagawa-ku**
**Tokyo 141 (JP)**

(72) Inventor: **Ishii, Takayuki c/o Sony Corporation**
**Patents Division 6-7-35 Kitashinagawa**
**Shinagawa-ku Tokyo 141 (JP)**
Inventor: **Yamauchi, Yuji c/o Sony Corporation**
**Patents Division 6-7-35 Kitashinagawa**
**Shinagawa-ku Tokyo 141 (JP)**

(74) Representative: **Thomas, Christopher Hugo**
**et al**
**D Young & Co 10 Staple Inn**
**London WC1V 7RD (GB)**

Courier Press, Leamington Spa, England.

## Description

The invention relates to methods and apparatus for forming double-layer motor coils.

Flat, brushless DC motors particularly suitable for small portable electronic equipment are now well known in the art. Such flat, brushless DC motors are generally provided with permanent magnet pole pieces which are secured to the rotor and co-operate with oppositely arranged energizable coils mounted on the stator. Rotational torque to cause the rotor to rotate relative to the stator is produced by the interaction of magnetic flux generated by the permanent magnetic pole pieces and the field caused by electrical current flowing through the coils. Generally, the direction of rotation is perpendicular to the direction of magnetic flux and to the direction of current flow through the coils. In order to produce sufficient rotational torque for general use, each coil is typically formed of a plurality of layers in order to increase the magnetic flux generated by the current flowing therethrough. When subminiature motors are required for small portable electronic equipment it is necessary to reduce the total size of the motor used with concomitant reductions in the thickness and diameter of each coil. This is typically achieved by reducing the number of layers of the coil, as well as reducing the number of turns in each layer.

In accordance with meeting this size limitation, it has been proposed to provide a double-layer coil in which each layer is formed separately, with the inner ends of the two individual coils subsequently being soldered together. Additionally, in forming such a double-layer coil it has also been proposed to utilize rectangular section conductors, in place of the more typical circular cross-section magnet wire, in order to increase field strength.

Typical of coils known heretofore for use in miniature applications are the multi-layer coil described in U.S. patent US-A-4,496,927 and the multi-layer electric coil utilizing a flat conductor described in British patent GB-A-1,285,646, and in DE-C-601053. Furthermore, it is known from DE-C-210701 to wind both layers simultaneously by using equivalent relative movements between parts of a winding machine.

When multi-layer coils are formed from individual coils, the coils must be individually soldered together or mechanically clamped together, and the processes to accomplish such series connection of the individual layers of the coils involve additional manufacturing steps and, more importantly, typically involve soldering, which must be closely monitored in time and temperature to prevent degradation of the coils following this soldering process.

According to one aspect of the invention there is provided a method of winding a double-layer coil of a conductor around a bobbin, comprising the steps of:

feeding a continuous conductor to a sheave;

winding a predetermined length of the conductor about the sheave;

locating adjacent to the bobbin a portion of the continuous conductor extending to the sheave;

rotating the bobbin in a first direction at a predetermined rate for winding the conductor thereon starting at said portion thereof that is adjacent to the bobbin and forming a first layer of the coil around the bobbin; and

simultaneously with winding the conductor on the bobbin revolving the sheave having the predetermined length wound thereon around the bobbin in said first direction at a rate twice the rate of rotation of the bobbin, thereby unwinding the conductor from the sheave and winding it around the bobbin to form a second layer of the coil on the bobbin simultaneously with forming the first layer.

According to another aspect of the invention there is provided apparatus for winding a double-layer coil, comprising:

means for supplying a continuous electrical conductor;

a rotatable bobbin element;

a flyer member rotatably supported around the bobbin element;

a sheave rotatably mounted on the flyer member;

means for rotating said sheave to wind thereon a predetermined length of the continuous conductor from said means for supplying a continuous electrical conductor;

the rotatable bobbin element, the flyer member, the sheave, and said means for supplying a conductor being so disposed that following winding of the conductor on the sheave a portion along the length of the continuous conductor is adjacent to the rotatable bobbin element; and

means for rotating the bobbin element at a first rate and revolving the flyer member around the bobbin element at a second rate that is equal to twice said first rate, whereby the conductor adjacent to the bobbin element is fed from said means for supplying and is wound around the rotating bobbin element and the conductor is unwound from the sheave and rewound around the bobbin element simultaneously to form first and second layers of the double-layer coil.

Thus, both the first and second layers of the coil are formed simultaneously about the bobbin and no electrical connection between individual layers of the dual-layer coil is required to be made.

The invention is diagrammatically illustrated by way of example with reference to the accompanying drawings, in which:-

Figure 1 is an exploded perspective view of a double-layer coil of previously proposed kind;

Figure 2 is an top plan view, in partial cross section, of one embodiment of apparatus for winding a double-layer coil according to the invention;

Figure 3 is a top plan view, in partial cross section, showing a portion of the apparatus of Figure 2 in more detail;

Figure 4 is a front elevational view, in partial cross section, of the portion of the apparatus shown in Figure 3;

Figure 5 is a side elevational view showing a portion of the apparatus of Figure 2;

Figure 6 is a side elevational view showing a cam member employed in the apparatus of Figure 2 in more detail;

Figure 7 is a cross-sectional view taken on section line VII-VII of Figure 6;

Figure 8 is a rear elevational view, in partial cross section, showing a bobbin of the apparatus of Figure 2 in more detail;

Figure 9 is a cross-sectional view of a spindle holder utilized in the apparatus of Figure 2;

Figure 10 is a side elevational view of the spindle holder of Figure 9;

Figure 11 is across-sectional view of a flange member utilized in the apparatus of Figure 2;

Figure 12 is a rear elevational view, in partial cross section, of a bobbin spindle utilized in the apparatus of Figure 2;

Figure 13 is a side elevational view of the bobbin spindle of Figure 12;

Figure 14 is an enlarged cross-sectional view taken on section line XIV-XIV in Figure 13;

Figures 15a-15e are schematic representations illustrating a method of winding a double-layer coil according to one embodiment of the invention;

Figure 16 is a pictorial representation in perspective of the winding method depicted in Figures 15a-15e;

Figure 17 is a pictorial representation in perspective of the winding method of Figure 16 at a subsequent stage;

Figure 18 is a front elevational view of a double-layer coil formed using a method and apparatus according to the invention;

Figure 19 is a perspective view of the coil of Figure 18; and

Figure 20 is a perspective view of the coil of Figures 18 and 19 in partially exploded form.

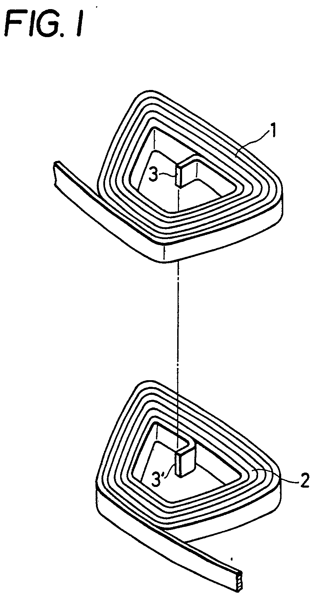

Figure 1 shows a double-layer coil for use in an electric motor and utilizing rectangular section conductors. More specifically, Figure 1 shows the double-layer coil partially exploded and comprising a first winding coil 1 and a second, separate winding coil 2. Inner ends 3,3' of the rectangular section conductors of the windings 1 and 2, respectively, are to be electrically connected, typically by a soldering process. As pointed out above, the soldering process is troublesome due to the requirement closely to monitor the temperature, pressure, and the length of time for which the heat is applied in order to preclude the degradation of the assembled coils.

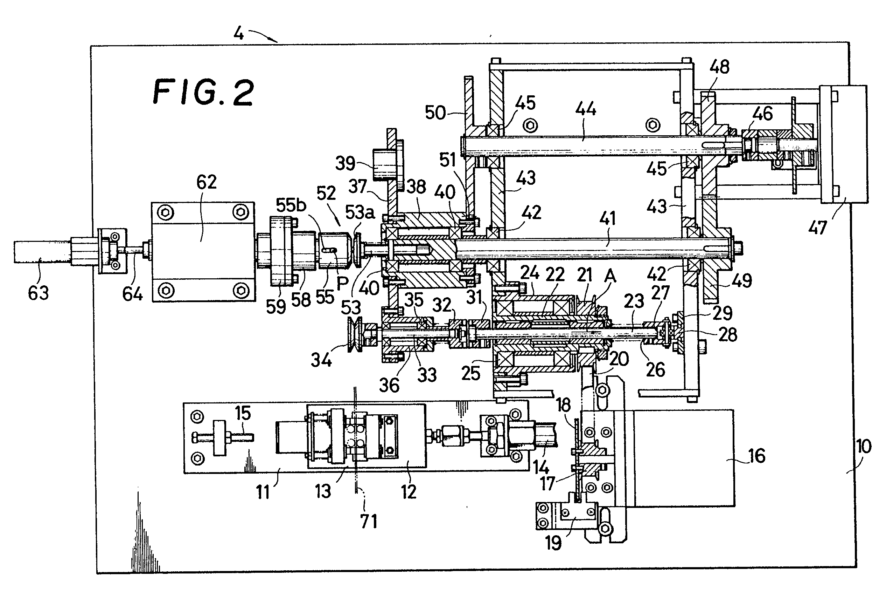

Figure 2 shows apparatus to wind a double-layer coil with both layers being wound simultaneously, thereby obviating the need to join two individually prepared layers to form the double-layer coil. The apparatus is mounted on a chassis 10, with a subchassis 11 mounted thereon that supports a guide assembly 13 that operates correctly to feed a conductor 71, having a rectangular cross-section. The conductor 71 is used to form the double-layer coil.

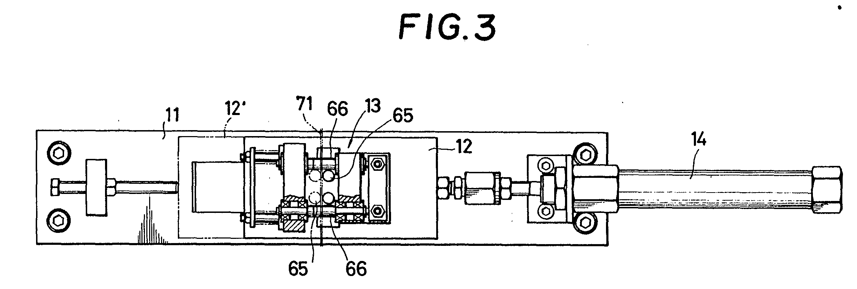

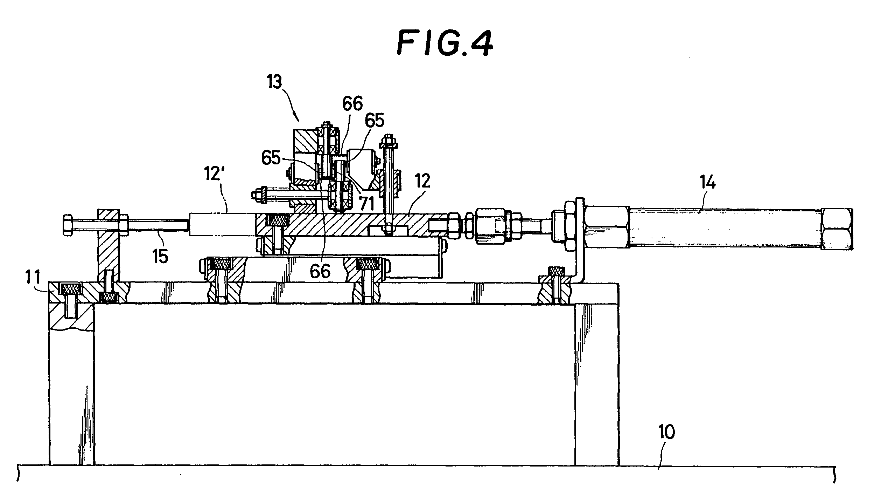

Figures 3 and 4 show that the guide assembly 13 includes a table 12 movably mounted on the subchassis 11, with movement thereof being provided by operation of a hydraulic or pneumatic cylinder 14. By actuation of a piston rod of the cylinder 14, the table 12 is horizontally slid along the subchassis 11 from the position shown in solid lines in Figures 3 and 4, leftwardly to the position shown in dotted lines at 12' of Figures 3 and 4. A stop to limit the extent of travel of the movable table 12 is provided by a bolt 15 firmly affixed to the subchassis 11.

The conductor 71 that is used to form the actual coil is a rectangular cross-sectional conductive wire that is fed between two pairs of vertically arranged rollers 65 and two pairs of horizontally arranged rollers 66. In this way, the conductor 71 is accurately guided and controlled by the assembly 13.

Referring back to Figure 2, a motor 16 of a kind typically used in forming coils is mounted on the chassis 10. Affixed to the drive shaft of the motor 16 are a pulley or sheave 17 and a sensing disc 18. A sensor 19 is affixed to the chassis 10 and cooperates with the disc 18 to determine the rotational rate of the drive shaft of the motor 16 and, thus, the revolutions per minute of the pulley 17.

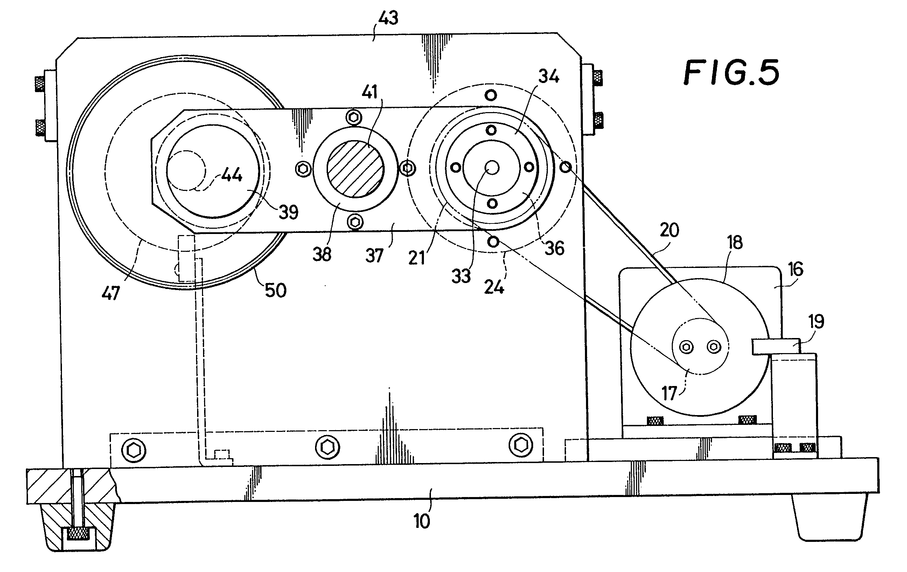

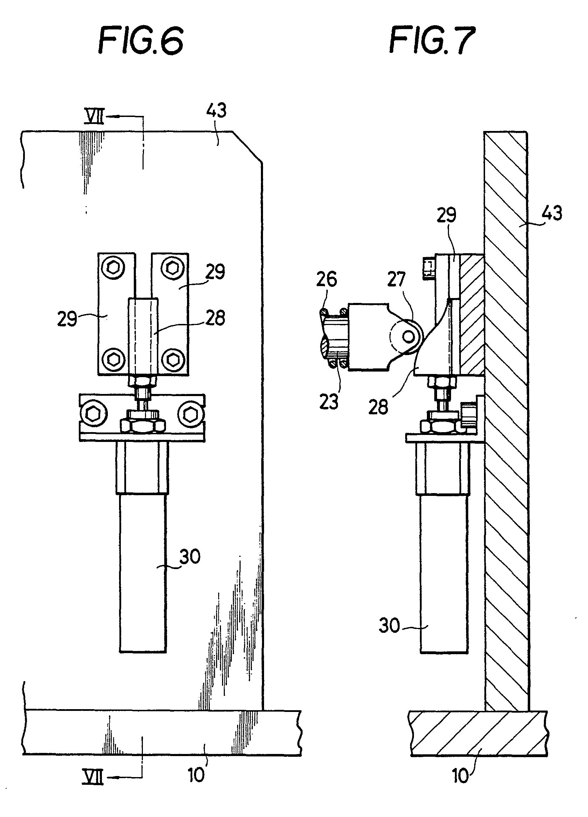

Figure 5 shows this assembly in more detail in a side elevational view, in which it is seen that an endless belt 20 is operably connected between the pulley 17 and a second pulley 21, which is connected to a drive shaft 23, which is mounted in a rotary sleeve 22. The rotary sleeve 22 is rotatably supported by bearing elements 25 that permit the shaft 23 to move in a horizontal or lateral direction as well as to rotate. As shown in Figure 2, a coil spring 26 is disposed around shaft 23 to urge the shaft 23 to move in the direction shown by arrow A in Figure 2, whereby a roller 27 rotatably attached to the end of the shaft 23 is engaged with a curved surface of a cam 28, as shown in Figures 6 and 7.

The cam 28 is slidably mounted for vertical movement on a pair of rails 29, which are firmly affixed to one of a pair of frame elements 43 mounted on the chassis 10. Movement is imparted to the cam 28 by the piston of a hydraulic or pneumatic cylinder 30, whereby upon movement of the cam 28, the roller 27 will cause the shaft 23 to change its position in the horizontal direction, as viewed in Figures 2 and 7. Driving the cam 28 upward will move the shaft 23 to the left, in the opposite direction to arrow A, compressing the spring 26 and bringing into engagement elements 31 and 32 that form a clutch assembly. More specifically, as shown in Figure 2, the clutch member 31 is affixed to the end of the shaft 23 opposite the roller 27 and is formed for engagement with a coupler 32, which is mounted on the end of a rotary shaft 33. Thus, by the opposing actions of the cylinder 30 and the spring 26, the elements 31 and 32 can be made to engage and disengage.

The shaft 33 is mounted for rotation by means of a bearing 35 arranged in a rotary bracket 36 and, at the end opposite the clutch coupler 32, mounts a sheave 34. The sheave 34 is provided to have wound thereon a predetermined length of conductor wire 71 that will ultimately become one of the layers of the finished coil. The rotary bracket 36 is bolted or firmly affixed to a flyer arm 37 having a counter weight or counter balance 39 symmetrically arranged on the flyer arm 37 relative to the rotary bracket 36. The flyer arm 37 is mounted on a rotary bracket 38 at its centre, and the rotary bracket 38 is rotatably supported on a main shaft 41 by a pair of bearings 40. The main shaft 41 is in turn mounted for rotation by means of a pair of bearings 42, which are mounted in the frame elements 43.

A powered drive shaft 44 is also rotatably mounted on the frame elements 43 by means of a pair of bearings 45 and is arranged substantially parallel to the main shaft 41. The drive shaft 44 has mounted on one end a coupler 46 that is connected to the drive shaft of a main drive motor 47 and, adjacent to the coupler 46, is a first drive gear 48, which is pinned or keyed to the drive shaft 44 and located so as to engage a gear 49 that is similarly pinned or keyed to the corresponding end of the main shaft 41. The number of teeth in the gears 48 and 49 is the same, thereby providing a gear ratio of 1:1, so that the drive shaft 44 and the main shaft 41 rotate at the same number of revolutions per minute, although in opposite directions. Mounted on the other end of the drive shaft 44 is drive gear 50 that engages a toothed gear element 51 bolted to one end of the rotary bracket 38. The number of gear teeth on second drive gear 50 is twice the number of gear teeth in the toothed gear element 51, so that a gear ratio of 2:1 is provided therebetween. By means of this 2:1 gear ratio the number of revolutions per minute of the rotary bracket 38 is twice that of the main shaft 41. Because the flyer arm 37 is bolted to the end of the rotary bracket 38 opposite that of the toothed element 51, the flyer arm 37 will also rotate at a number of revolutions per minute twice that of the main shaft 41.

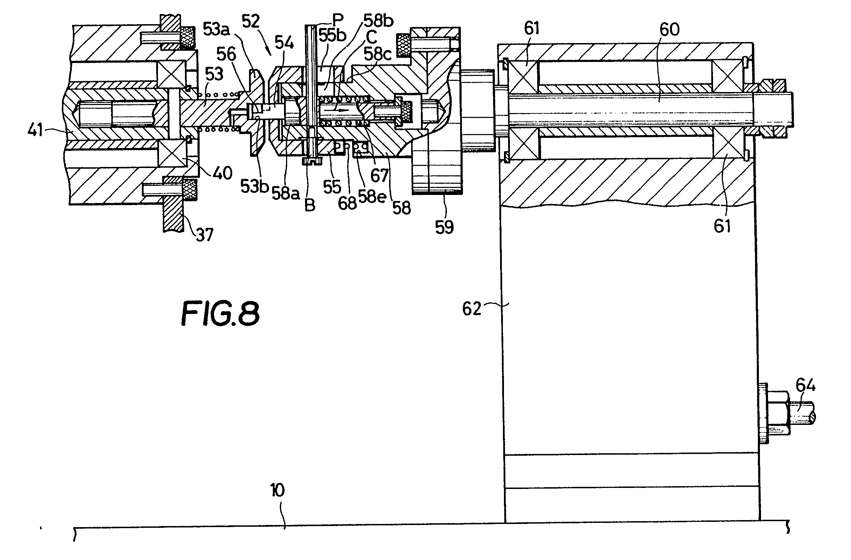

The specific construction of the bobbin assembly mounted at the end of the main shaft 41 opposite the drive gear 49 is shown in Figure 8, which is a rear elevational view in partial cross section of the bobbin assembly 52 of Figure 2 looking in from the rear of the apparatus, that is, from the side opposite the subchassis 11, so as not to have sheave 34 and conductor guide assembly 13 obscuring the view. Turning then to Figure 8, the bobbin assembly 52 comprises a flange member 53 that extends from the end of the main shaft 41 to which the flyer arm 37 is affixed. The bobbin assembly 52 includes a bobbin spindle 54 and a bobbin spindle holder element 55, which is disposed around the bobbin spindle 54 and opposes the flange member 53. More specifically, the bobbin spindle 54 is formed to be inserted into an inner bore 58a of a rotary sleeve 58 and is free to slide into and out of the bore 58a. The bobbin shaft 54 can be moved in the direction of arrow C by manually operating a pin P against the force of a compression spring 67. Nevertheless, as will be seen in the following description, the bobbin shaft 54 and the rotary sleeve 58 are operably connected to rotate together during the coil winding operation.

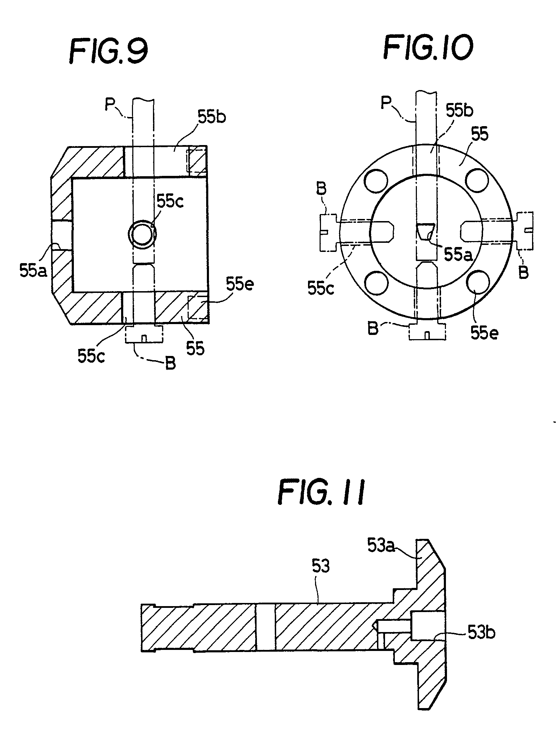

Figures 9 and 10 show that the bobbin spindle holder 55 has a trapezoidal shaped hole 55a in its end wall into which is inserted the end of the bobbin spindle 54. Also formed in the spindle holder 55 is a slot 55b and three radial holes 55c in the side walls. The slot 55b and the three holes 55c are equally spaced around the cylindrical bobbin spindle holder 55. Additionally, four bores 55e are provided in a surface of spindle holder 55 at the open end thereof and the bores 55e are equally spaced around such end surface and are also equally spaced with respect to the slot 55b and the bores 55c.

The spindle holder 55 is slidingly arranged on an outer surface 58c of the rotary sleeve 58 and the exact location of the spindle holder 55 around the outer surface 58c can be adjusted by means of three screws, shown typically at B in Figure 8 and shown in broken lines in Figures 9 and 10. The adjusting screws B co-operate with springs 68 that are mounted in bores 58e that are formed in the rotary sleeve 58. The springs 68 thus co-operate between the bores 58e in the rotary sleeve 58 and the respective bores 55e formed in the end face of spindle holder 55. Thus, by action of the screws B, which clamp onto the surface of the rotary sleeve 58, the extent to which the bobbin spindle 54 extends through the trapezoidal aperture 55a in the end wall of the spindle holder 55 can be adjusted. The slot 55b formed in the spindle holder 55 is arranged to be at the same location as a similar slot 58b formed in the rotary sleeve 58, whereby the pin P that is firmly affixed to the bobbin spindle 54 can move in the direction of the arrow C of Figure 8. In this fashion, by manual or machine actuation of the pin P, the bobbin spindle 54 can be retracted and a completed double-layer coil that has been formed can be freely removed.

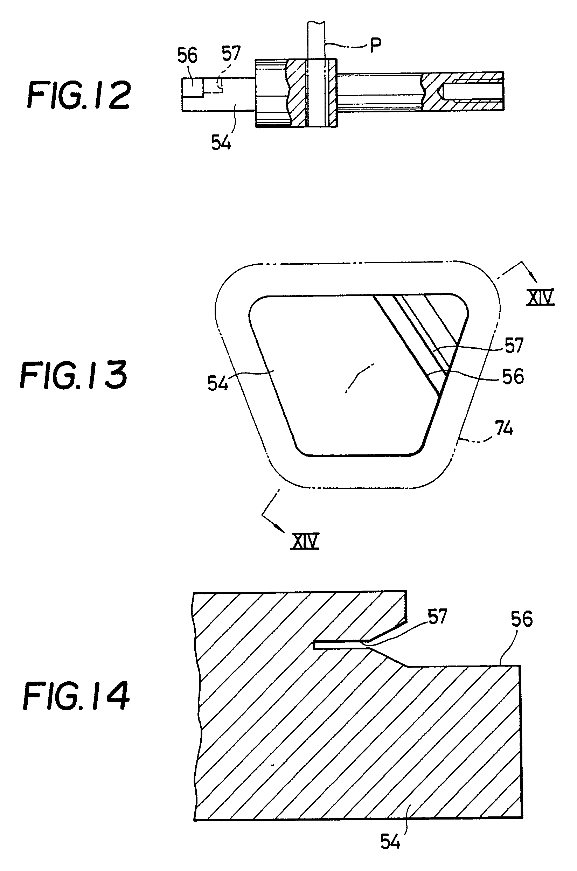

The flange member 53 is shown in cross-sectional detail in Figure 11, and it can be seen that on the central axis of the flange element 53 a cavity 53b is formed to receive the end of the bobbin spindle 54. The cavity 53b is of trapezoidal shape corresponding to the shape of the bobbin spindle 54 and is provided with an air relief bore or drilling to prevent a vacuum from retaining the spindle 54 and to prevent air pressure from precluding easy insertion of the bobbin spindle 54 into the cavity 53b.

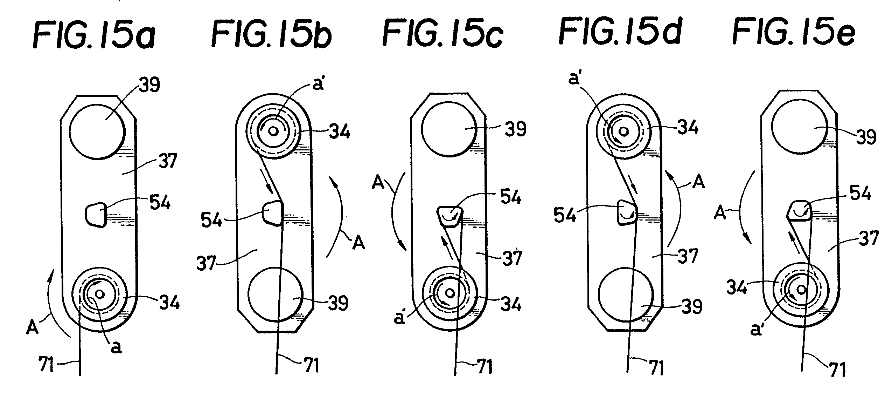

The construction of the bobbin spindle 54 is shown in more detail in Figures 12, 13, and 14 in which it is seen that the free end of the bobbin spindle 54 has a relieved edge or cut-away corner 56 at a corner of the trapezoidal end surface thereof. At this relieved or cut-away corner there is formed a slot 57 which serves to engage the flat conductor 71 used to form the coils at a position along its length determined by the number of turns in each layer of the double-layer coil being formed. Such engagement will be shown in more detail in Figures 15a-15e, however, in Figure 13 one of the coils being formed, that is, a first winding 74, is shown by a dotted line. Additionally, the manner in which the pin P is inserted into the bobbin shaft 56 is also shown in Figure 12.

As seen in Figures 2 and 8, the rotary sleeve 58 is fixed to a rotary disc 59, which is attached to the end of a shaft 60. The shaft 60 is rotatably supported by bearings 61 which are supported in a movable table 62. The table 62 is caused to be moved in response to operation of a hydraulic or pneumatic cylinder 63 by action of a piston rod 64. In this way, the bobbin spindle 54 is received into or released from the cavity 53b formed in the end of the flange member 53 at the centre of the flange 53a.

By means of the apparatus described above it is possible to form a double-layer coil using flat-conductor wire and this operation is pictorially illustrated in Figures 15a to 15e. As can be seen in Figure 15a, an initial winding operation is performed by using the sheave 34 and the flat electrical conductor 71, in which the cam member 28 shown in Figures 6 and 7 is driven upwardly by the cylinder 30 so that the rotary shaft 23 is moved to the left, in the opposite direction to the arrow A of Figure 2, whereby the elements 31 and 32 of the clutch assembly are engaged. At this time, the movable table 12 that has the conductor guide assembly 13 mounted thereon is located by the action of the air cylinder 14 in the position shown in solid lines in Figures 3 and 4.

It should be noted that the operation of the overall assembly, as shown, for example, in Figure 2, can be accomplished by manual means, that is, by manually energizing the motors and the pneumatic cylinders in the desired sequence. Nevertheless, in practice a suitable control system is provided with appropriate timing so that the operational events occur for the desired duration and proper sequence. An appropriate timing and control system is not disclosed, because it is not necessary for the understanding of the operation of the invention.

The motor 16 is energized to rotate the drive shaft 23 through the action of the pulleys 17, 21 and the belt 20, so that the sheave 34 is caused to rotate by the drive shaft 23 through the clutch elements 31, 32 and the drive shaft 33. Accordingly, as shown in Figure 15a, the flat conductor 71 passing between the pairs of rollers 65 and 66 (shown in Figures 3 and 4) is wound around the rotating sheave 34 in the direction of arrow a. Because the actual length of the coil being formed is known, the time for which the motor 16 is energized is selected to wind a sufficient amount of conductor 71 onto the pulley 34 to form one of the layers of the end-product, double-layer coil. As indicated above, this can be done manually but in practice a control system will time out the operation of the motor 16 so that the proper length of conductor 71 is wrapped onto the sheave 34.

The next operation in the coil winding sequence is to clamp an outer portion of the conductor 71 that has been wound onto the sheave 34 by using the end of the bobbin spindle 54. As shown in Figure 15b, the cam member 28, of Figures 6 and 7, is moved downward under the action of the cylinder 30 so that the rotary shaft 23 moves to the right under the action of the spring 26, thereby releasing the clutch assembly by separating the element 31 from the coupler 32. Once the bracket 36 is free of any connection to the rotary shaft 23, the motor 47 is energized to begin turning the drive shaft 44, thereby turning the gears 50 and 51 which cause the rotary bracket 38 to rotate. When the rotary bracket 38 rotates the flyer arm 37 rotates and in Figure 15b the flyer arm 37 is shown rotated through 180° from its initial at-rest position of Figure 15a. Upon such rotation as shown in Figure 15b the flyer arm 37, a mid-length portion of the conductor 71 is now caused to come into contact with the end of the bobbin spindle 54 and, specifically, wraps against the relieved edge or cut-away corner 56 of the bobbin spindle 54, because at this time the pneumatic cylinder 63 has moved the bobbin spindle 54 away from the cavity 53b formed in the flange element 53. The movable table 12 that mounts the conductor guide assembly 13 is moved from its solid line position to its dotted line position 12', as shown in Figures 3 and 4, whereby, the portion of the conductor 71, which is wrapped against the relieved corner 56 of the bobbin spindle 54 is engaged in the slot 57 formed in the end of the bobbin spindle 54. Once the conductor engaging operation is accomplished, the cylinder 63 can be energized to operate the piston rod 64 to move the sliding table 62 so that the bobbin spindle 54 engages in the cavity 53b of the flange element 53. It should be noted that it is the flange element 53 that is driven and that the bobbin spindle 54 is free to rotate by means of the shaft 60 and the pair of bearings 61.

Since a sufficient amount of the conductor 71 to form one of the layers of the double-layer coil has been pre-wound onto the sheave 34 and a midportion of the conductor 71 has been engaged by the slot 57 of the bobbin spindle 54, the operation of winding the double-layer coil can be performed. It should be noted in relation to Figures 15c to 15e, as well as Figures 16 and 17, that each of the double-layers of the coil will be wound at the same time. The bobbin spindle 54 having been engaged in the cavity 53b is caused to be rotated by means of the main drive motor 47, with the rotary force being transmitted by way of the coupler 46, the gears 48 and 49, and the drive shaft 41 and the flange member 53 that positively mates with the end of the bobbin spindle 54. On the other hand, the flyer arm 37, which has the sheave 34 mounted thereon, is rotated in the opposite direction by means of the motor 47 driving the coupler 46 through interaction of the shaft 44, the gears 50 and 51 and the rotary bracket 38.

It will be recalled from the above description that the gear ratios between the gears 48 and 49 and between the gear 50 and the gear element 51 are so selected that the flyer arm 37 will rotate in the same direction as the bobbin spindle 54 but at twice the speed. Thus, if the number of revolutions of the bobbin spindle 54 is selected as R (rpm), then the number of revolutions of the sheave 34 in orbit around the bobbin spindle 54 will be 2R (rpm). This has the result that the sheave 34 rotates around the bobbin spindle 54 at a relative number of revolutions 2R-R =R. By this action then, the conductor 71 that had been previously wound around the sheave 34 is now unwound in the direction of arrow a' of Figures 15b to 15e and at the same time rewound around the bobbin spindle 54 to form one layer of the coil. Of course, the conductor 71 is also continuously being fed-off through the guide assembly 13, so that the conductor is also being wound around the bobbin spindle 54 to form another layer of the double-layer coil.

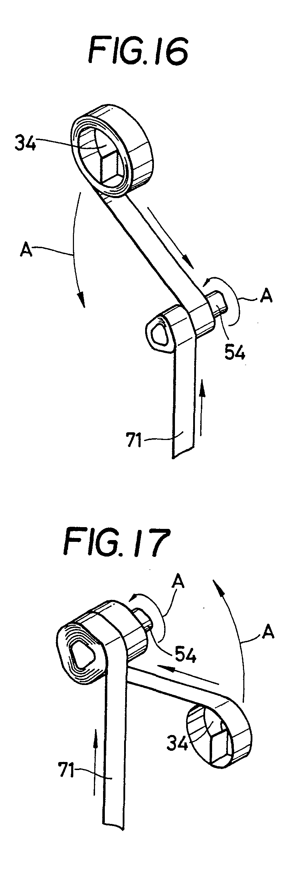

During this operation, the movable table 12 that has the conductor guide assembly 13 mounted thereon is held at the position 12' shown by dotted lines in Figures 3 and 4, so that the first layer 74 of the coil that is being rewound from the sheave 34 and the second layer of the coil 75, shown in Figure 19, that is being initially wound through the guide assembly 13 are both formed at the same time with no overlapping, that is, the layers of the coil are formed side-by-side in juxtaposition. This formation of the coils in a side-by-side fashion with aligned axes is shown in Figures 16 and 17.

Once the desired number of turns of the layers has been provided around the bobbin spindle 54, the motor 47 is stopped and the cylinder 63 operates to pull back the table 62 in a leftward direction as viewed in Figure 2. This movement of the table 62 then releases the bobbin spindle 54 from the cavity 53b formed in the flange member 53 so that the completely wound double-layer coil can be removed from the bobbin spindle 54 by pulling or sliding the pin P to the left as viewed in Figure 2 or to the right as viewed in Figure 8, which is a rear view.

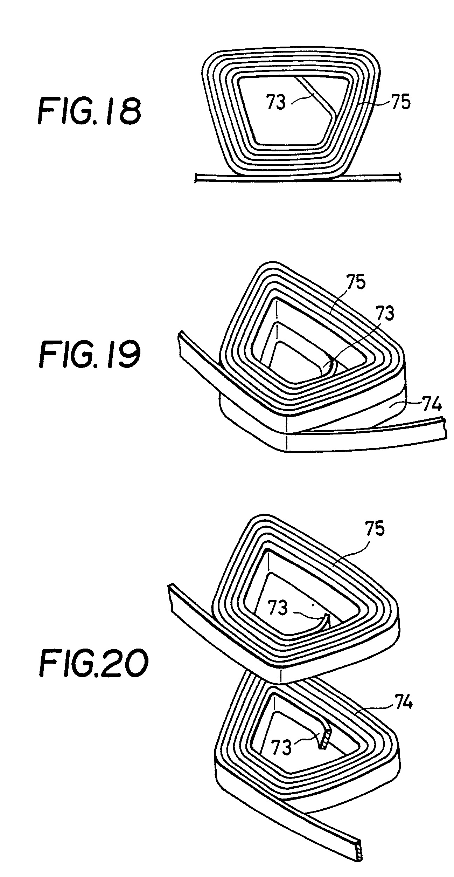

The completed double-layer coil formed of flat conductor 71 is shown in Figures 18 to 20, in which a centre portion 73 of the resultant coil is shown divided in Figure 20, so that the two layers 74 and 75 can be shown in an exploded view. The centre portion 73 corresponds to that portion of the conductor 71 which was engaged in the slot 57 of the bobbin spindle 54, and because this is the middle position and because the two layers 74 and 75 are formed simultaneously, then such layers are of the same size.

Although a bifurcation was formed in the end of the bobbin spindle 54 by forming the slot 57 in the cut-away corner 56 of bobbin spindle 54, it will be understood that other modifications of the end of the bobbin spindle can be effected. For example, if a certain amount of tension were to be applied to conductor 71, especially at the stage in the operation represented in Figure 15b, then the conductor 71 could be automatically wound around the bobbin spindle without any engagement in a slot. In such modication, the bobbin spindle can be engaged with the cavity formed in the flange element at the beginning of the operation with the flyer plate and the bobbin spindle commencing rotation at the exact same time.

**Claims**

1. A method of winding a double-layer coil (74, 75) of a conductor (71) around a bobbin (54), comprising the steps of:
   feeding a continuous conductor (71) to a sheave (34);
   winding a predetermined length of the conductor (71) about the sheave (34);
   characterised by the steps of
   locating adjacent to the bobbin (54) a portion (73) of the continuous conductor (71) extending to the sheave (34);
   rotating the bobbin (54) in a first direction at a predetermined rate for winding the conductor (71) thereon starting at said portion (73) thereof that is adjacent to the bobbin (54) and forming a first layer (74) of the coil around the bobbin (54); and
   simultaneously with winding the conductor (71) on the bobbin (54) revolving the sheave (34) having the predetermined length wound thereon around the bobbin (54) in said first direction at a rate twice the rate of rotation of the bobbin (54), thereby unwinding the conductor (71) from the sheave (34) and winding it around the bobbin (54) to form a second layer (75) of the coil on the bobbin (54) simultaneously with forming the first layer (74).

2. A method according to claim 1, in which the step of arranging the conductor (71) adjacent to the bobbin (54) includes the step of engaging the conductor (71) at said portion (73) thereof with a free end of the bobbin (54).

3. A method according to claim 2, in which said step of engaging the conductor (71) includes forming the free end of the bobbin (54) with a bifurcation (57) and engaging the conductor (71) in the bifurcation (57).

4. A method according to any one of claims 1 to 3, comprising the further step following winding of the conductor (74) on the sheave (34) of shifting a supply (13) of the continuous conductor (71), thereby forming the first (74) and second (75) layers immediately adjacent to one another.

5. A method according to any one of claims 1 to 4, comprising the further step following the winding of the predetermined length of conductor (71) on the sheave (34) of disengaging the sheave (34) from a source (16) of rotary winding force.

6. A method according to claim 5, in which the step of disengaging the sheave (34) comprises operating a cam device (27, 28) to move a drive shaft (23) out of engagement with a corresponding shaft (33) of the sheave (34).

7. A method according to any one of claims 1 to 6, in which the step of rotating the bobbin (54) includes providing a bobbin holder (55) having a non-circular cut-out (55a), and rotating the bobbin holder (55) at the predetermined rate.

8. A method according to any one of claims 1 to 7, in which the step of rotating the bobbin (54) and revolving the sheave (34) are performed using a single drive motor (47).

9. Apparatus for winding a double-layer coil, comprising:

means (13) for supplying a continuous electrical conductor (71);

a rotatable bobbin element (54);

a flyer member (37) rotatably supported around the bobbin element (54);

a sheave (34) rotatably mounted on the flyer member (37);

characterised by

means (16, 23, 33) for rotating said sheave (34) to wind thereon a predetermined length of the continuous conductor (71) from said means (13) for supplying a continuous electrical conductor;

the rotatable bobbin element (54), the flyer member (37), the sheave (34), and said means (13) for supplying a conductor being so disposed that following winding of the conductor (71) on the sheave (34) a portion (73) along the length of the continuous conductor (71) is adjacent to the rotatable bobbin element (54); and

means (47, 44, 41) for rotating the bobbin element (54) at a first rate and revolving the flyer member (37) around the bobbin element (54) at a second rate that is equal to twice said first rate, whereby the conductor (71) adjacent to the bobbin element (54) is fed from said means (13) for supplying and is wound around the rotating bobbin element (54) and the conductor (71) is unwound from the sheave (34) and rewound around the bobbin element (54) simultaneously to form first (74) and second (75) layers of the double-layer coil.

10. Apparatus according to claim 9, in which said means for supplying a conductor includes guide means (13) arranged to have the continuous electrical conductor (71) pass therethrough for controllably guiding the conductor (71).

11. Apparatus according to claim 10, in which the guide means (13) includes at least one pair of horizontal rollers (66) and at least one pair of vertical rollers (65), each of said at least one pair being arranged for contact with the conductor (71).

12. Apparatus according to claim 9 or claim 10, in which the means for rotating the bobbin element (54) and revolving the flyer member (37) comprise a single drive motor (47) and two drive shafts (44, 41) co-operating through gear train means (48, 49, 50, 51).

13. Apparatus according to any one of claims 9 to 12, in which the means for rotating the sheave (34) element includes a drive motor (16), a drive shaft (23), and an engageable clutch means (31, 32).

14. Apparatus according to claim 13, in which said means for rotating the sheave (34) further includes cam means (27, 28) selectively operable to slide the drive shaft (23) to cause the engageable clutch means (31, 32) to engage and disengage.

15. Apparatus according to claim 9, in which the flyer member (37) is formed as an elongate arm with the sheave (34) rotatably mounted at one end thereof and includes a counter weight (39) arranged on the elongate arm at an end opposite the sheave (34).

16. Apparatus according to any one of claims 9 to 11, in which the bobbin element (54) is formed as a spindle (54) having a non-circular cross-section at a free end thereof.

17. Apparatus according to claim 16, in which said means for rotating the bobbin element comprises a drive motor (47) connected to drive a flange member (53) having a non-circular cavity (53b) formed in an end thereof, the cavity (53b) being complementary to the non-circular cross-section of the spindle (54) for receiving the spindle (54) and rotating the spindle (54).

18. Apparatus according to claim 16, in which said non-circular cross-section (53b) is a trapezoid.

19. Apparatus according to any one of claims 9 to 18, in which the rotatable bobbin element (54) includes means (57) for engaging the conductor (71) at said portion (73) along the length of the continuous conductor (71) when said conductor is adjacent to the rotatable bobbin element (54).

20. Apparatus according to claim 19, in which the bobbin element is formed as a spindle (54) and said means for grasping comprises a slot (57) formed in a free end of the spindle (54).

**Patentansprüche**

1. Verfahren zum Wickeln eines Leiter (71) um einem Wickelkern (54) zur Herstellung einer zweilagigen Spule (74, 75), wobei

ein kontinuierlicher Leiter (71) einer Scheibe (34) zugeführt wird und

ein Abschnitt dieses Leiters (71) mit vorbestimmter Länge auf diese Scheibe (34) aufgewickelt wird,

gekennzeichnet durch die Verfahrensschritte

daß ein Teilabschnitt (73) des sich zu der Scheibe (34) erstreckenden kontinuierlichen Leiters (71) an den Wickelkern angelegt wird,

daß der Wickelkern (54) mit einer vorbestimmten Geschwindigkeit in einer ersten Richtung gedreht wird, um den Leiter (71), beginnend mit dem an den Wickelkern (54) angrenzenden Teilabschnitt, auf den Wickelkern (54) aufzuwickeln und so eine erste Lage (74) der Spule um den Wickelkern (54) zu erzeugen,

und daß gleichzeitig mit dem Aufwickeln des Leiters (71) auf den Wickelkern (54) die Scheibe (34), auf der der Leiterabschnitt vorbestimmter Länge aufgewickelt ist, in der genannten ersten Richtung mit einer Geschwindigkeit, die doppelt so groß ist wie die Drehgeschwindigkeit des Wickelkerns (54), um den Wickelkern (54) herumgeführt wird, wodurch der Leiter (71) von der Scheibe (34) abgewickelt und auf den Wickelkern (54) aufgewickelt wird, so daß gleichzeitig mit der Erzeugung der ersten Lage (74) eine zweite Lage (75) der Spule auf dem Wickelkern (54) erzeugt wird.

2. Verfahren nach Anspruch 1, bei dem der Verfahrensschritt, in welchem der Leiter (71) an den Wickelkern (54) angelegt wird, den Verfahrensschritt beinhaltet, daß der Leiter mit dem genannten Teilabschnitt (73) mit dem freien Ende des Wickelkerns (54) verbunden wird.

3. Verfahren nach Anspruch 1, bei dem der Verfahrensschritt, in welchem der Leiter mit dem Wickelkern verbunden wird, den Verfahrensschritt beinhaltet, daß das freie Ende des Wickelkerns (54) mit einer Gabel (57) ausgestattet und der Leiter (71) mit dieser in Eingriff gebracht wird.

4. Verfahren nach einem der Ansprüche 1 bis 3 mit dem auf das Aufwickeln des Leiters (71) auf die Scheibe (34) folgenden weiteren Verfahrensschritt, daß die Einrichtung (13) zum Zuführen des kontinuierlichen Leiters (71) so verschoben wird, so daß die erste (74) und die zweite Lage (75) unmittelbar nebeneinander erzeugt werden.

5. Verfahren nach einem der Ansprüche 1 bis 4 mit dem auf das Aufwickeln des Leiterabschnitts vorbestimmter Länge auf die Scheibe (34) folgenden weiteren Verfahrensschritt, daß die Scheibe von einer Antriebsquelle (16) abgekuppelt wird, die die Antriebskraft zum Aufwickeln liefert.

6. Verfahren nach Anspruch 5, bei dem der Verfahrensschritt des Abkuppelns der Scheibe (34) das Betätigen einer Nockenvorrichtung (27, 28) beinhaltet, wodurch eine Antriebswelle (23) aus dem Eingriff mit einer korrespondierenden Welle (33) der Scheibe (34) herausbewegt wird.

7. Verfahren nach einem der Ansprüche 1 bis 6, bei dem für den Verfahrensschritt des Drehens des Wickelkerns (54) ein Wickelkernhalter (55) mit einem von der Kreisform abweichenden Ausschnitt (55a) vorgesehen und dieser Wickelkernhalter (55) mit der vorbestimmten Geschwindigkeit gedreht wird.

8. Verfahren nach einem der Ansprüche 1 bis 7, bei dem für die Verfahrensschritte des Drehens des Wickelkerns (54) und des Herumführens der Scheibe (34) ein einziger Antriebsmotor (47) verwendet wird.

9. Vorrichtung zum Wickeln einer zweilagigen Spule
mit einer Einrichtung (13) zum Zuführen eines kontinuierlichen elektrischen Leiters (71),
mit einem drehbaren Wickelkernelement (54),
mit einem um das Wickelkernelement (54) drehbar gelagerten Flyerelement (37),
sowie mit einer an dem Flyerelement (37) drehbar montierten Scheibe (34),
gekennzeichnet durch
Mittel (16, 23, 33) zum Drehen der Scheibe (34) derart, daß auf sie von der Einrichtung (13) zum Zuführen des Leiters (71) ein Abschnitt des kontinuierlichen Leiters (71) mit vorbestimmter Länge aufgewickelt wird,
die Anordnung des Wickelkernelements (74), des Flyerelements (37), der Scheibe (34) und der Einrichtung (13) zum Zuführen des Leiters (71) derart, daß nach dem Aufwickeln des Leiters (71) auf die Scheibe (34) ein Teilabschnitt (73) des Leiters (71) an das drehbare Wickelkernelement (54) angrenzt,
sowie Mittel (47, 44, 41) zum Drehen des Wickelkernelements (54) mit einer ersten Geschwindigkeit und zum Herumführen des Flyerelements (37) um das Wickelkernelement (34) mit einer zweiten Geschwindigkeit, die doppelt so groß ist wie die erste Geschwindigkeit, so daß einerseits der an das Wickelkernelement (54) angrenzende, von der Zuführeinrichtung (13) gelieferte Leiter (71) auf dem rotierenden Wickelkernelement (54) aufgewickelt und andererseits der Leiter (71) von der Scheibe (34) abgewickelt und auf dem Wickelkernelement (54) wieder aufgewickelt wird, und gleichzeitig eine erste (74) und eine zweite Lage (75) der zweilagigen Spule erzeugt werden.

10. Vorrichtung nach Anspruch 9, bei der die Einrichtung zum Zuführen des kontinuierlichen Leiters Führungsmittel (13) aufweist, die so angeordnet sind, daß sie von dem elektrischen Leiter (71) durchlaufen werden und diesen steuerbar führen.

11. Vorrichtung nach Anspruch 10, bei der die Führungsmittel (13) wenigstens ein Paar horizontale Rollen (66) und wenigstens ein Paar vertikale Rollen (65) aufweisen, wobei jedes dieser Paare so angeordnet ist, daß sie mit dem Leiter (71) in Kontakt kommen.

12. Vorrichtung nach Anspruch 9 oder 10, bei der die Mittel zum Drehen des Wickelkernelements (54) und zum Herumführen des Flyerelements (37) einen einzigen Antriebsmotor (47) aufweisen sowie zwei Antriebswellen (44, 41), die über ein Zahnradgetriebe (48, 49, 50, 51) zusammenwirken.

13. Vorrichtung nach einem der Ansprüche 9 bis 12, bei der die Mittel zum Drehen der Scheibe (34) einen Antriebsmotor (16), eine Antriebswelle (23) und eine Eingriffskupplung (31, 32) umfassen.

14. Vorrichtung nach Anspruch 13, bei der die Mittel zum Drehen der Scheibe (34) ferner eine Nockeneinrichtung (27, 28) umfassen, mit deren Hilfe die Antriebswelle (23) wahlweise so verschiebbar ist, daß die Eingriffskupplung eingerückt bzw. ausgerückt wird.

15. Vorrichtung nach Anspruch 9, bei der das Flyerelement (37) als langgestreckter Arm ausgebildet ist, in dessen einem Endbereich die Scheibe (34) drehbar montiert ist und in dessen der Scheibe (34) entgegengesetztem Endbereich ein Gegengewicht (39) angeordnet ist.

16. Vorrichtung nach einem der Ansprüche 9 bis 11, bei der das Wickelkernelement (54) als Spindel (54) ausgebildet ist, die an ihrem freien Ende einen von der Kreisform abweichenden Querschnitt besitzt.

17. Vorrichtung nach Anspruch 16, bei der die Mittel zum Drehen des Wickelkernelements einen Antriebsmotor (47) aufweisen, der so angeordnet ist, daß er ein Flanschteil (53) antreibt, in dessen einem Endbereich eine von der Kreisform abweichende Ausnehmung (53b) ausgebildet ist, die einem zu dem von der Kreisform abweichenden Querschnitt der Spindel (54) komplementären Querschnitt besitzt, so daß die Spindel (54) aufgenommen und gedreht werden kann.

18. Vorrichtung nach Anspruch 16, bei der der von der Kreisform abweichende Querschnitt der Ausnehmung (53b) Trapezform hat.

19. Vorrichtung nach einem der Ansprüche 9 bis 18, bei der das drehbare Wickelkernelement (54) Mittel (57) aufweist, mit denen der Leiter (71) mit dem genannten Teilabschnitt (73) in Eingriff längs der Längsausdehnung des kontinuierlichen Leiters kommt, wenn der Leiter dem drehbaren Wickelkernelement (54) benachbart ist.

20. Vorrichtung nach Anspruch 19, bei der das Wickelkernelement als Spindel (54) ausgebildet ist und die Eingriffseinrichtung einen am freien Ende der Spindel (54) ausgebildeten Schlitz (57) aufweist.

**Revendications**

1. Procédé d'enroulement d'un bobinage à deux couches (74, 75) d'un conducteur (71) autour d'une bobine (54), comprenant les étapes suivantes:

l'avance d'un conducteur continu (71) vers un disque (34), et

l'enroulement d'un tronçon de longueur prédéterminée du conducteur (71) autour du disque (34), caractérisé par les étapes suivantes:

le positionnement d'une partie (73) du conducteur continu (71) dirigé vers le disque (34) à proximité de la bobine (54),

l'entraînement en rotation de la bobine (54) dans un premier sens avec une vitesse prédéterminée afin que le conducteur (71) s'enroule sur elle depuis ladite partie (73) qui est adjacente à la bobine (54), et la formation d'une première couche (74) du bobinage autour de la bobine (54), et

en même temps que le conducteur (71) est enroulé sur la bobine (54), l'entraînement en rotation du disque (34) sur lequel le tronçon de longueur prédéterminée est enroulé, autour de la bobine (54), dans le premier sens et avec une vitesse égale au double de la vitesse de rotation de la bobine (54), si bien que le conducteur (71) se déroule du disque (34) et s'enroule autour de la bobine (54) en formant une seconde couche (75) du bobinage sur la bobine (54) en même temps que la première couche (74) est formée.

2. Procédé selon la revendication 1, dans lequel l'étape de disposition du conducteur (71) près de la bobine (54) comprend l'étape de mise de ladite partie (73) du conducteur (71) au contact d'une extrémité libre de la bobine (54).

3. Procédé selon la revendication 2, dans lequel l'étape de mise en contact du conducteur (71) comporte la formation d'une fourche (57) à l'extrèmité libre de la bobine (54) et l'introduction du conducteur (71) dans la fourche (57).

4. Procédé selon l'une quelconque des revendications 1 à 3, comprenant l'étape supplémentaire, suivant l'enroulement du conducteur (74) sur le disque (34), de déplacement d'une réserve (13) du conducteur continu (71) de manière que la première et la seconde couche (74, 75) soient formées en étant adjacentes l'une à l'autre.

5. Procédé selon l'une quelconque des revendications 1 à 4, comprenant l'étape supplémentaire, après l'enroulement du tronçon de longueur prédéterminée du conducteur (71) sur le disque (34), de séparation du disque (34) d'une source (16) d'une force d'entraînement en rotation.

6. Procédé selon la revendication 5, dans lequel l'étape de séparation de la poulie (34) comprend la commande d'un dispositif à came (27, 28) destiné à déplacer un arbre d'entraînement (23) afin qu'il se sépare d'un arbre correspondant (33) du disque (34).

7. Procédé selon l'une quelconque des revendications 1 à 6, dans lequel l'ètape d'entraînement en rotation de la bobine (54) comporte la disposition d'un support (55) de bobine ayant une découpe non circulaire (55a), et l'entraînement en rotation du support (55) à la vitesse prédéterminée.

8. Procédé selon l'une quelconque des revendications 1 à 7, dans lequel l'étape d'entraînement en rotation de la bobine (54) et d'entraînement en rotation du disque (34) est rèalisée à l'aide d'un seul moteur d'entraînement (47).

9. Appareil d'enroulement d'un bobinage à deux couches, comprenant:

un dispositif (13) destiné à transmettre un conducteur électrique continu (71),

un élément (54) à bobine rotative,

un balancier (37) supporté afin qu'il puisse tourner autour de l'élément à bobine (54), et

un disque (34) monté sur le balancier (37) afin qu'il puisse tourner, caractérisé par:

un dispositif (16, 23, 33) destiné à faire tourner le disque (34) afin qu'un tronçon de longueur prédéterminée du conducteur continu (71), provenant du dispositif (13) de transmission d'un conducteur électrique continu, soit enroulé,

l'élément (54) à bobine rotative, le balancier (37), le disque (34) et le dispositif (13) destiné à transmettre un conducteur étant disposés de manière que, après enroulement du conducteur (71) sur le disque (34), une partie (73) de la longueur du tronçon du conducteur continu (71) soit adjacente à l'élément (54) à bobine rotative, et

un dispositif (47, 44, 41) destiné à faire tourner l'élément (54) à bobine à une première vitesse et à faire tourner le balancier (37) autour de l'élément (54) à bobine à une seconde vitesse qui est égale au double de la première vitesse, si bien que le conducteur (71) placé près de l'élément à bobine (54) avance à partir du dispositif (13) de transmission et s'enroule autour de l'élément (54) à bobine rotative et le conducteur (71) se déroule du disque (34) et se rèenroule autour de l'élément (54) à bobine simultanément de manière que la première et la seconde couche (74, 75) du bobinage à deux couches soient formées.

10. Appareil selon la revendication 9, dans lequel le dispositif destiné à transmettre le conducteur comporte un dispositif de guidage (13) destiné à faire passer le conducteur électrique continu (71) afin qu'il soit guidé de manière réglée.

11. Appareil selon la revendication 10, dans lequel le dispositif de guidage (13) comporte au moins une paire de galets horizontaux (66) et au moins une paire de galets verticaux (65), chacune des paires étant destinée à être au contact du conducteur (71).

12. Appareil selon la revendication 9 ou 10, dans lequel le dispositif destiné à faire tourner l'élément à bobine (54) et à faire tourner le balancier (37) comporte un moteur unique (47) et deux arbres d'entraînement (44, 41) qui coopèrent par l'intermédiaire d'une transmission à engrenage (48, 49, 50, 51).

13. Appareil selon l'une quelconque des revendications 9 à 12, dans lequel le dispositif destiné à faire tourner l'élément à disque (34) comporte un moteur (16) d'entraînement, un arbre menant (23) et un embrayage (31, 32) qui peut être débrayé.

14. Appareil selon la revendication 13, dans lequel le dispositif destiné à faire tourner le disque (34) comporte en outre un dispositif à came (27, 28) qui peut être commandé sélectivement afin qu'il fasse coulisser l'arbre menant (23) et provoque l'embrayage et le débrayage du dispositif à embrayage (31, 32).

15. Appareil selon la revendication 9, dans lequel le balancier (37) est sous forme d'un bras allongé, le disque (34) étant monté à une première extrémité du bras afin qu'il puisse tourner, et le balancier a un contrepoids (39) placé sur le bras allongé à l'extrémité opposée à celle qui porte le disque (34).

16. Appareil selon l'une quelconque des revendications 9 à 11, dans lequel l'élément (54) à bobine est formé par une broche (54) ayant une section non circulaire à son extrémité libre.

17. Appareil selon la revendication 16, dans lequel le dispositif destiné à faire tourner l'élément à bobine comporte un moteur (47) connecté de manière qu'il entraîne un organe (53) à bride ayant une cavité non circulaire (53b) formée à une extrémité, la cavité (53b) étant complémentaire de la section non circulaire de la broche (54) afin qu'elle puisse loger la broche (54) et puisse l'entraîner en rotation.

18. Appareil selon la revendication 16, dans lequel la section non circulaire (53b) est trapézoïdale.

19. Appareil selon l'une quelconque des revendications 9 à 18, dans lequel l'élément (54) à bobine rotative comporte un dispositif (57) destiné à être au contact du conducteur (71) dans ladite partie (73) de celui-ci sur la longueur du tronçon de conducteur continu (71) lorsque le conducteur est adjacent à l'élément (54) à bobine rotative.

20. Appareil selon la revendication 19, dans lequel l'élément à bobine est réalisé sous forme d'une broche (54) et le dispositif de saisie comporte une fente (57) formée à l'extrémité libre de la broche (54).

FIG. I

FIG.2

2

# FIG.3

FIG.4

FIG.5

5

EP 0 180 359 B1

## FIG.6

## FIG.7

FIG.8

FIG.9

FIG.10

FIG.11

**FIG.12**

56   57   P

54

**FIG.13**

XIV

54   57   56   74

XIV

**FIG.14**

57   56

54

FIG.15a FIG.15b FIG.15c FIG.15d FIG.15e

EP 0 180 359 B1

# FIG.16

# FIG.17

FIG.18

FIG.19

FIG.20